# EUROPEAN PATENT SPECIFICATION

(11) **EP 1 375 422 B1**
(45) Date of publication and mention of the grant of the patent: **28.06.2006**
(21) Application number: 03013536.2
(22) Date of filing: 13.06.2003
(51) Int. Cl.: C01B 17/64

(54) **Process for production of ammonium thiosulphate**
Verfahren zur Herstellung von Ammoniumthiosulfat
Procédé de production de thiosulfate d'ammonium

(30) Priority: 20.06.2002 DK 200200950
(43) Date of publication of application: 02.01.2004
(73) Proprietor: Haldor Topsoe A/S, 2800 Kgs. Lyngby (DK)
(72) Inventor: Schoubye, Peter, 2970 Vedbaek (DK); Christensen, Kurt Agerbaek, 3460 Birkerod (DK)
(74) Representative: Grünecker, Kinkeldey, Stockmair & Schwanhäusser Anwaltssozietät

(56) References cited:
- EP-A- 0 928 774
- US-A- 3 431 070
- US-A- 3 473 891
- US-A- 3 591 335

## Description

### INTRODUCTION

The present invention relates to a process for continuous production of a concentrated solution of ammonium thiosulfate (ATS) from off gases comprising H₂S and NH₃ such as refinery SWS (Sour Water Stripper)-gas, which contains NH₃ as well as H₂S and H₂S gas streams.

The process according to the invention is distinguished by utilizing only the NH₃ in the SWS gas for the production of high purity ATS solution, thus producing 7.25 kg 60% ATS solution per kg of NH₃ in the SWS gas treated in the process. Furthermore, when the process according to the invention uses the effluent gas of a Claus plant as SO₂-source for the process, the total sulphur-recovery of the Claus plant and the ATS plant taken together is increased to more than 99.95% with only 86-95% sulphur recovery being required in the Claus plant.

### BACKGROUND AND OBJECTIVE FOR THE INVENTION

It is known to produce aqueous solutions of ATS by reacting a solution of ammonium sulphite with sulphur in liquid form or with sulphides or polysulphides in aqueous solution as described in Kirk-Othmer Encyclopedia of Chemical Technology, 4^{th} edition, 1997, vol 24, page 62 and in US Patent Nos. 2,412,607; 3,524,724 and 4,478,807.

It is furthermore known from US Patent No. 3,431,070 to produce ATS in a continuous process from gaseous feed streams comprising H₂S, NH₃ and SO₂. By the process of this invention ATS and sulphur is produced from a first feed gas stream comprising H₂S and NH₃ and a second feed gas stream comprising SO₂ in three absorption steps. In a first absorber, NH₃ and H₂S are separated in a H₂S off-gas stream and an NH₃-rich solution of ATS. The main part of the solution is passed to a second absorber, in which it is contacted with the SO₂-rich feed gas stream under formation of an off-gas that is vented and a solution rich in ATS and ammonium sulphites, which in a third absorber is contacted with the H₂S-gas from the first absorber and, optionally, with additional H₂S. After removal of sulphur being formed in the third absorber, the major part of the ATS-solution formed in the third absorber is recycled to the first absorber, while a minor part is mixed with a fraction of the NH₃-rich solution of ATS formed in the first absorber forming the product solution of ATS.

There are three major disadvantages of this process: Elementary sulphur is formed in the third absorber and must be separated from the solution, the off-gas vented from the third absorber has a high concentration of H₂S and the process is complicated with three integrated absorption steps.

It is also known from EP 0 928 774 A1 to produce an aqueous solution of ATS from gaseous feed streams comprising NH₃, H₂S and possibly SO₂. By the process of this patent, a concentrated solution of ammonium hydrogen sulphite (AHS) is produced from NH₃ and SO₂ in a first absorption step comprising one or two absorbers in series. Said solution is contacted in a second absorption step with a gaseous mixture of H₂S and NH₃ forming the product solution of ATS.

The major disadvantage of this process is that it requires import of NH₃ for the process.

Furthermore, a process is known from Danish Patent No. 174407, wherein ATS is produced by using only the NH₃ contained in the SWS-gas stream as the NH₃ source for ATS-production.

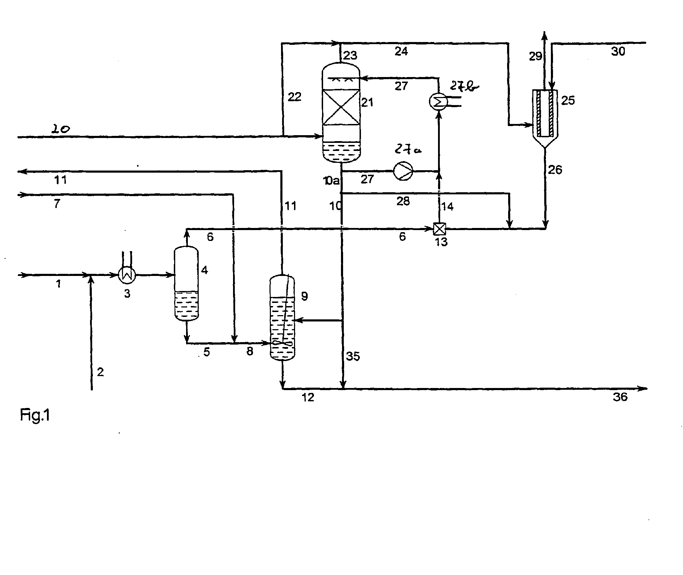

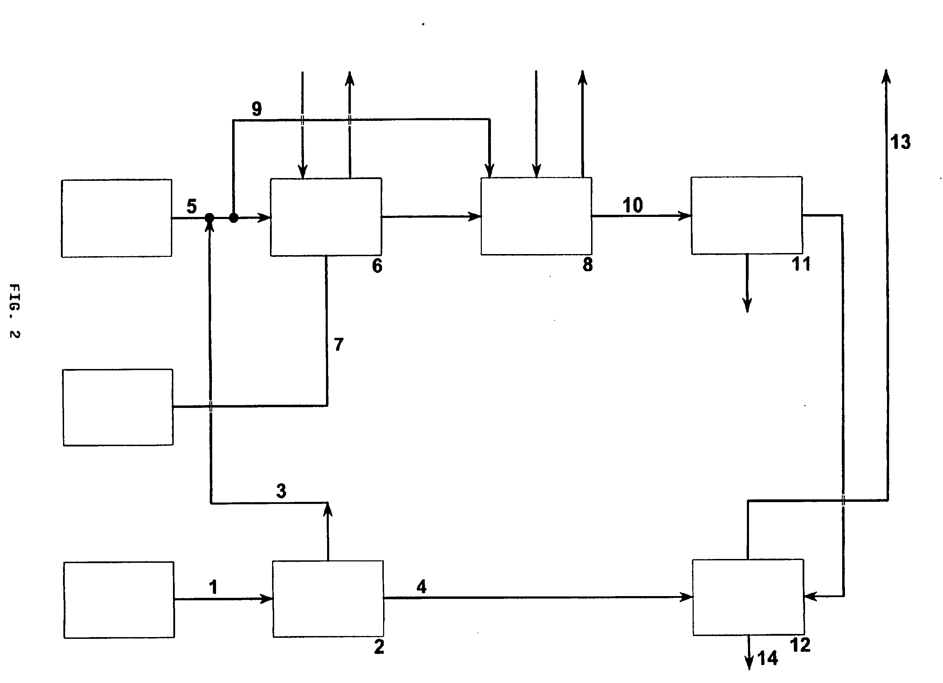

In said process a first feed stream, typically SWS-gas, comprising more than 0.33 mole H₂S per mole of NH₃ is contacted with a stream of sulphite solution in line 18 in the drawing Fig. 1 and Fig. 2 in said patent application in a reactor A1 for formation of ATS. However, experiments have shown that the presence of excess H₂S for the formation of ATS from sulphites in the reactor will lead to the presence of free sulphide in the product solution (line 12), part of which is recycled (line 17) to the SO₂ absorber (A2), in which the sulphide will be decomposed to give H₂S in the absorber effluent gas (line 19). Furthermore, the large recycle of solution (line 13) to the SO₂ absorber and back to the reactor (lines 17-18) is also a disadvantage of the process.

The objective of this invention is to establish an improved process for the production of ATS in which over 99.9% of all sulphur and all NH₃ in the feed streams are recovered as ATS without any of the above mentioned disadvantages.

### SUMMARY OF THE INVENTION

This invention relates to a process for continuous production of ammonium thiosulphate, (NH₄)₂S₂O₃ (ATS) from NH₃, H₂S and SO₂ comprising steps of:
(a) partial condensation in a partial condenser (4) of a first gaseous or partial liquid feed stream comprising H₂O, H₂S and NH₃ with a molar H₂S:NH₃ ratio < 0.35 or dividing said first feed stream into a substream (6) and a further substream (5);
(b) passing an aqueous condensate comprising NH₄HS and NH₃ from the partial condenser (4) to a reactor (9) in which said condensate is contacted with a third feed gas stream (7) comprising H₂S and with an aqueous solution (10) comprising NH₄HSO₃and (NH₄)SO₃ under formation of an aqueous solution of (NH₄)₂S₂O₃ or passing the substream (5) of said first feed stream to the reactor (9)in which said substream is contacted with a third feed gas stream (7) comprising H₂S and with an aqueous solution (10) comprising NH₄HSO₃ and (NH₄)₂SO₃ under formation of an aqueous solution of (NH₄)₂S₂O₃;
(c) passing a gas stream comprising NH₃ and H₂S from the partial condenser (4) to a mixing device (13) in which said gas stream is completely dissolved in water being drained off from an aerosol filter (25) or passing the substream (6) of said first feed stream to the mixing device (13) in which said substream is completely dissolved in the water being drained off from the aerosol filter (25);
(d) passing a second feed gas stream 20 comprising approximately 2/3 mole SO₂ per mole of NH₃ contained in the first feed stream to a SO₂ absorber (21) and the aerosol filter (25);
(e) passing an aqueous solution produced in mixing device (13) to the SO₂ absorber (21);
(f) passing off gas from the absorber (21) to the aerosol filter (25), and
(g) adding to the aerosol filter (25) a balance amount of water required for obtaining approximately 40-65 wt% (NH₄)₂S₂O₃ in the aqueous of solution of (NH₄)₂S₂O₃ being withdrawn from the reactor (9).

Step (e) can preferably be carried out by adding said aqueous solution to a liquid recycle loop 27 of the SO₂₋absorber.

### Detailed Description of the Preferred Embodiment of the Invention

Referring to the drawing Fig. 1, a first feed stream of fractionated SWS-gas in line 1 comprising, for example, 6 kmole/h NH₃ associated with 1.1 kmole/h H₂S and 2 kmole/h H₂O, is treated with a second feed gas stream in line 20 comprising SO₂ associated with water vapor and inert components such as N₂, CO₂ and O₂ and a third feed gas stream comprising H₂S in line 7. Feed water required for the process is fed in line 30 to aerosol filter 25. Some feed water may also be added in line 2 to the first feed gas stream. More than 99.95% of the amounts of NH₃ and SO₂ in the feed streams are recovered in the product ATS stream exiting the process in line 36. Thus, the off gas from the process in line 29 contains a negligible amount of SO₂ and essentially no NH₃ and H₂S.

The original SWS-gas available in refineries usually has a molar H₂S:NH₃ ratio of about 1:1, which is higher than directly acceptable for the process. Therefore, the original SWS-gas must first be fractionated by known methods in columns not shown on the figure to give a feed gas stream in line 1 with less than about 0.35 mole H₂S per mole of NH₃ in the feed gas, preferably with a H₂S:NH₃ molar ratio in the range of 0.1-0.25. The two other off streams (not shown in Fig. 1) from said fractionation are H₂S, which can be used as make-up for stream 7, and practically pure water. Experiments with the process have shown that with H₂S:NH₃ > about 0.35 in stream 1, it will be very difficult or impossible to avoid presence of free sulphide in the ATS product stream in line 36 and/or presence of H₂S in the process exit gas in line 29. A H₂S:NH₃ ratio of about 1.1:6 = 0.18 in feed stream 1 seems very suitable for conducting the process according the invention.

The amounts of H₂S, SO₂ and H₂O comprised in the feed streams for production of a 60% ATS solution from 6 kmole NH₃ in the first feed stream are calculated from the mass balance of the over-all process:

Equation (1): 6 NH₃ + 4 SO₂ + 2 H₂S + 17.5 H₂O ⇒ 3 (NH₄)₂S₂O₃ + 16.5 H₂O,

corresponding to the following amounts in kg :

Equation (1a): 102.14 kg NH₃ + 256.24 kg SO₂ + 68.16 kg H₂S + 315.32 kg H₂O.

give 741.86 kg 60% ATS solution.

The first feed stream comprising 6 kmole NH₃, 1.1 kmole H₂S and 2 kmole H₂O in line 1 is cooled in the cooler 3 to a temperature between 20°C and 60°C, or well below its dew point upstream of the partial condenser 4. In the partial condenser 4 the first feed stream is separated in an aqueous solution exiting in line 5 comprising NH₄HS and some NH₃ dissolved in practically all of the water in the feed stream 1, and in a gas phase exiting in line 6 comprising most of the NH₃ (approximately 4.6 kmole NH₃) and a small amount of H₂S (approximately 0.1 kmole H₂S). Water may be added in line 2 upstream of 4, but in the example the amount of water added to the process at this point is chosen to be zero. The liquid stream 5 comprising in the example 1.0 kmole NH₄HS, 0.4 kmole NH₃ and 2 kmole H₂O goes to reactor 9 in which it is reacted with (0.9 + x) kmole H₂S, the third feedstream and as defined below, introduced in line 7 and with the liquid sulphite stream 10 comprising 0.15 kmole ATS, 3.3 kmole AHS (NH₄HSO₃), 0.5 kmole DAS ((NH₄)₂SO₃) and 11.65 kmole H₂O. In reactor 9 ATS will be formed by the principal reactions:

Equation(2): 4 NH₄HSO₃ + 2 NH₃ + 2H₂S ⇒ 3 (NH₄)₂S₂O₃ + 3H₂O

Equation(3): 4 (NH₄)₂SO₃ + 2 H₂S ⇒ 3 (NH₄)₂S₂O₃ + 2 NH₃ + 3H₂O

resulting in formation of 741.8 kg of 60% ATS solution leaving the reactor through line 12.

An excess amount of x kmole H₂S may be added to the feed stream of 0.9 kmole H₂S, which constitutes the third feed gas stream, in line 7 in order to increase the rates of reactions 2 and 3. The x kmole H₂S, which may constitute 0-10% of equivalent amount of H₂S required for the process, is vented from the reactor through the vent line 11.

Additional sulphite solution may be added through line 35 to the ATS product solution having e.g. a composition of 60% ATS (3 kmol ATS and 16.5 kmol water), in order to complete the conversion to ATS of possible traces of sulphide or H₂S in stream 12 and/or to add 0-2% DAS to the product ATS solution exiting the process in line 36. For simplicity, no sulphite is added through line 35 in the present example. pH of the solution in line 12 and in the reactor 9 will typically be in the range 7.6-8.6.

The off gas from partial condenser 4 (4.6 kmol NH₃ and 0.1 kmol H₂S) is passed to mixing device 13 in which it is completely dissolved in an aqueous stream 26 from aerosol filter 25. Stream 26 will usually comprise at least 0.1 kmole AHS which reacts with the H₂S and NH₃ in stream 6 under formation of ATS according to for instance equation 2. A minor fraction of the sulphite solution exiting the SO₂₋absorption is added to stream 26 through line 28 in order to ensure complete removal of all H₂S or sulphide in aqueous stream 14 before it is added to SO₂ absorption loop 27. Addition of excess ammonium sulphites through 28 will also keep pH in stream 14 below of about 9.2. If the pH value is higher than 9.2 in stream 14 (due to the high concentration of NH₃ in said stream), the formation of ATS from the sulphide may be inhibited leading to liberation of H₂S in SO₂-absorber 21 and to presence of H₂S in the absorber off gas.

The flow of SO₂ (second feed gas stream) required for the process is in line 20 fed to SO₂-absorber 21 in which the SO₂ is in principle absorbed by the NH₃ comprised in the NH₃-rich off gas in line 6 from the partial condensation in 4 of the feed stream 1. According to the over-all mass balance of the present example given in equation 1, 4.0 kmole SO₂ is required for the process. As the SO₂ feed stream is produced by upstream combustion of H₂S or other sulphurous components, the SO₂ in line 20 will be diluted with inert gas comprising N₂, CO₂ and O₂ and with water vapor. In Fig. 1 it is assumed that the 4 kmole SO₂ is diluted with approximately 100 kmole inert gases and 6 kmole H₂O corresponding to a H₂O dew point of 35-36°C.

SO₂ absorber 21 is typically a fixed bed absorber where the absorption liquid is recycled in a loop 27 comprising a circulating pump 27a and a cooler 27b which maintains the temperature of absorption preferably at 35-40°C, whereby no net condensation or net evaporation of H₂O takes place in the absorber and in the subsequent aerosol filter 25.

In the example shown in Fig. 1, 15.5 kmole/h water is supplied to aerosol filter 25 for instance by spraying the water on the filter candles. As there will be practically no NH₃, SO₂ or aerosols in the process off gas in line 29, the aqueous solution exiting the absorber in line 10 (after subtraction of the fraction taken out in line 28) can be calculated from the mass balances to be 617.2 kg/h solution comprising 0.15 kmole/h ATS, 3.3 kmole/h AHS, 0.5 kmole/h DAS and 11.65 kmole/h H₂O. The equilibrium partial pressures of NH₃ of this solution at 40°C have been found to be approximately 10⁻³ bars higher than that of SO₂.

In order to recover this NH₃, 0.1 kmole SO₂ is added to the SO₂ absorber effluent gas by bypassing in line 22 about 0.1/4 = 2.5% of the gas flow in line 20 around the SO₂ absorber and adding said bypass stream to the absorber effluent gas in line 23. The NH₃ and SO₂ react in the gas phase forming an aerosol of AHS, which is removed in filter 25. All aerosols present in the gas leaving the SO₂-absorber will also be removed and dissolved in the water supplied to the filter. The filter off gas in line 29 contains typically about 40 ppm SO₂, less than 2 ppm NH₃ and essentially no H₂S.

Separation in partial condenser 4 of the fractionated SWS-feed gas stream in a gaseous NH₃-rich stream 6 and a liquid stream 5 is very advantageous but not strictly necessary for the process.

The separation can in principle be replaced by splitting stream 1 in a stream 5 being passed to reactor 9 together with stream 7 and a stream 6 being mixed in mixing device 13 in principle as seen in Fig 1.

The SO₂-absorption may also be carried out with two SO₂₋absorbers connected in series, or SO₂-absorber 21 may be a bubbling SO₂-absorber in which the feed gas in line 20 is bubbled through the absorbing solution with or without external circulation in a loop 27 as shown in Fig 1.

A fraction of the second feed gas stream can be by-passed the absorber 21 and mixed with the effluent gas from absorber 21 upstream of aerosol filter 25. The fraction can contain 0.7 - 1.3 moles of SO₂ per mole of NH₃ contained in the off gas from SO₂-absorber 21.

Essentially complete conversion of sulphide to (NH₄)₂S₂O₃ in the process and a desired concentration of excess (NH₄)₂SO₃ and NH₄HSO₃ of 0-2 wt% in product exit stream 36 are achieved (1) by adjusting the feed rate of H₂S in line 7 to give a small stream in line 11 of excess H₂S in the range of 0-10% of the equivalent amount of H₂S for the production of ATS and (2) by bypassing a minor fraction of stream 10 through line 35 to stream 12. In other words, the feed rate of H₂S in third feedstream 7 is adjusted to give an excess effluent H₂S stream from reactor 9 of 0-10% of the equivalent amount of H₂S for the production of (NH₄)₂S₂O₃ and a fraction 10 of the solution produced in the SO₂ absorber 21 is bypassed to the (NH₄)₂S₂O₃ solution withdrawn from reactor 9.

Use of the present ATS process is in particular advantageous when the off gas from a Claus plant is used as source for the SO₂ required for the process. This is seen in the overview in Fig. 2 of sulphur recovery with a simple Claus process combined with the present ATS process in a refinery producing H₂S and SWS-gas from various hydrogenation and cracking treatments of hydrocarbons. Without use of the ATS process all H₂S and SWS gas had to be treated in the Claus plant and the ammonia had to be decomposed at substantial costs. No more than 95-97% sulphur recovery can be achieved in simple 2 or 3-bed Claus plants. Higher degrees of sulphur recovery require expensive processes for tail gas treatment. Increasing the sulphur recovery to more than 99% by known processes is very expensive investment wise as well as with regard to operating costs and energy consumption. However, 99.95% total sulphur recovery or more is automatically achieved with no increase in operating costs and energy consumption by utilizing the off gas from a simple 2-bed Claus plant as the SO₂-source for the present ATS process utilizing the SWS-gas for ATS-production, as shown in the schematic drawing in Fig. 2.

Referring to Fig. 2, the SWS gas containing e.g. 1 kmol ammonia and 1 kmol hydrogen sulphide, in line 1 is sent to a fractionation unit 2, in which it is split into an H₂S-rich stream 3 having e.g. 2/3 kmol hydrogen sulphide, and an NH₃-rich stream 4 containing all the NH₃ and approximately 0.33 mole H₂S per mole NH₃. The H₂S-rich stream 3 is mixed with an H₂S gas having e.g. 9 kmol hydrogen sulphide, in line 5 and sent to a Claus plant 6, in which most of the H₂S is recovered as sulphur in line 7. Air is also required in Claus plant 6 and steam is produced. The sulphur recovery can be e.g. more than 93.1%. The off-gas from the Claus plant is sent to a tail gas incinerator 8, in which the H₂S is combusted to SO₂ with an excess of air. Steam is produced. A fraction of the Claus feed gas is bypassed (hydrogen sulphide bypass) around the Claus plant in line 9 to the tail gas incinerator and combusted to SO₂. The bypass flow in line 9 is adjusted to give approximately 2/3 mole SO₂ in the off-gas from the incinerator in line 10 per mole NH₃ contained in the SWS gas in line 1. In order to produce concentrated ATS solution, a fraction of the water contained in the off-gas from the incinerator is removed in a condensation step 11. The off-gas from the condensation step containing approximately 2/3 mole SO₂ is sent to the ATS process 12 according to the present invention, in which the SO₂ is removed by reaction with NH₃-rich stream 4 from fractionation unit 2. The purified gas stream 13 is vented through the stack and the product ATS solution (e.g. a 60% solution with 0.5 kmol ATS) is recovered in line 14.

## Claims

1. A process for continuous production of ammonium thiosulphate, (NH₄)₂S₂O₃ (ATS) from NH₃, H₂S and SO₂ comprising steps of:
(a) partial condensation in a partial condenser (4) of a first gaseous or partial liquid feed stream comprising H₂O, H₂S and NH₃ with a molar H₂S:NH₃ ratio < 0.35 or dividing said first feed stream into a substream (6) and a further substream (5);
(b) passing an aqueous condensate comprising NH₄HS and NH₃ from the partial condenser (4) to a reactor (9) in which said condensate is contacted with a third feed gas stream (7) comprising H₂S and with an aqueous solution (10) comprising NH₄HSO₃ and (NH₄)₂SO₃ under formation of an aqueous solution of (NH₄)₂S₂O₃ or passing the substream (5) of said first feed stream to the reactor (9)in which said substream is contacted with a third feed gas stream (7) comprising H₂S and with an aqueous solution (10) comprising NH₄HSO₃ and (NH₄)₂SO₃ under formation of an aqueous solution of (NH₄)₂S₂O₃;
(c) passing a gas stream comprising NH₃ and H₂S from the partial condenser (4) to a mixing device (13) in which said gas stream is completely dissolved in water being drained off from an aerosol filter (25) or passing the substream (6) of said first feed stream to the mixing device (13) in which said substream is completely dissolved in the water being drained off from the aerosol filter (25);
(d) passing a second feed gas stream 20 comprising approximately 2/3 mole SO₂ per mole of NH₃ contained in the first feed stream to a SO₂ absorber (21) and the aerosol filter (25);
(e) passing an aqueous solution produced in mixing device (13) to the SO₂ absorber (21);
(f) passing off gas from the absorber (21) to the aerosol filter (25), and
(g) adding to the aerosol filter (25) a balance amount of water required for obtaining approximately 40-65 wt% (NH₄)₂S₂O₃ in the aqueous of solution of (NH₄)₂S₂O₃ being withdrawn from the reactor (9).

2. A process of claim 1, wherein a fraction of the second feed gas stream (20) is by-passed the absorber (21) and mixed with the effluent gas from the absorber (21) upstream of the aerosol filter (25), said fraction containing 0.7 - 1.3 moles of SO₂ per mole of NH₃ contained in the off gas from the SO₂-absorber (21).

3. A process of claim 1, wherein the SO₂-absorber (21) is a packed column.

4. A process of claim 1, wherein the SO₂-absorber (21) is a bubbling tank reactor with or without external liquid recycle

5. A process of claim 1, wherein a fraction (28) of the solution (10) comprising NH₄HSO₃ and (NH₄)₂SO₃ produced in the SO₂-absorber (21) is passed to the mixing device (13), said fraction of the solution comprising a flow of sulphite (NH₄HSO₃ and (NH₄)₂SO₃) which together with the sulphite in the off stream from the aerosol filter (25) relates to the flow of sulphide (H₂S + NH₃HS) in the stream from the condenser (4) by a molar ratio of 2:1 or more.

6. A process of claim 1, wherein the second feed gas stream is an effluent gas stream from a Claus plant which is incinerated and its H₂O-content reduced to 3-10 vol% H₂O, preferably 6 vol% H₂O by cooling and partial condensation of its content of H₂O upstream of the present process.

7. A process of claim 1, wherein the first feed stream (1) is Sour Water Stripper gas having been fractionated and adjusted to contain H₂S and NH₃ to a molar ratio of H₂S:NH₃ of <0.35.

8. A process of claim 1, wherein pH value of the aqueous solution comprising NH₄HSO₃ and (NH₄)₂SO₃ used for absorption of SO₂ in the absorber (21) is adjusted between approximately 5 and approximately 7.5.

9. A process of claim 1, wherein the feed rate of H₂S in the third feedstream (7) is adjusted to give an excess effluent H₂S stream from the reactor (9) of 0-10% of the equivalent amount of H₂S for the production of (NH₄)₂S₂O₃ and a fraction (10) and (35) of the solution produced in the SO₂ absorber (21) is bypassed to the (NH₄)₂S₂O₃ solution (12) withdrawn from the reactor (9).

## Patentansprüche

1. Verfahren zur kontinuierüchen Herstellung von Ammoniumthiosulfat, (NH₄)₂S₂O₃ (ATS) aus NH₃, H₂S und SO₂, umfassend folgende Schritte:
(a) teilweises Kondensieren eines ersten gasförmigen oder teilweise flüssigen Einspeisungsstromes, umfassend H₂O, H₂S und NH₃ mit einem molaren H₂S:NH₃-Verhältnis < 0,35 in einem Teilkondensator (4) oder Unterteilen des ersten Einspeisungsstromes in einen Unterstrom (6) und einen weiteren Unterstrom (5);
(b) Leiten eines wässrigen Kondensats umfassend NH₄HS und NH₃ aus dem Teilkondensator (4) zu einem Reaktor (9), wobei das Kondensat mit einem dritten Einspeisungsgasstromes (7), welcher H₂S umfasst, und mit einer wässrigen Lösung (10), welche NH₄HSO₃ und (NH₄)₂SO₃ umfasst, unter Bildung einer wässrigen Lösung aus (NH₄)₂SO₃ in Kontakt gebracht wird oder Leiten des Unterstroms (5) des ersten Einspeisungsstromes zu dem Reaktor (9), in welchem der Unterstrom mit einem dritten Einspeisungsgasstrom (7), welcher H₂S umfasst, und mit einer wässrigen Lösung (10), welche NH₄HSO₃ und (NH₄)₂SO₃ umfasst, unter Bildung einer wässrigen Lösung aus (NH₄)₂S₂O₃ in Kontakt gebracht wird;
(c) Leiten eines Gasstromes, umfassend NH₃ und H₂S aus dem Teilkondensator (4) zu einer Mischeinrichtung (13), in welcher der Gasstrom vollständig in Wasser aufgelöst wird, das von einem Aerosolfilter (25) abfließt, oder Leiten des Unterstroms (6) des ersten Einspeisungsstromes zu der Mischeinrichtung (13), in welcher der Unterstrom vollständig in Wasser aufgelöst wird, das von dem Aerosolfilter (25) abfließt;
(d) Leiten eines zweiten Einspeisungsgasstromes (20), umfassend ungefähr 2/3 mol SO₂ je mol NH₃, das in dem ersten Einspeisungsstrom enthalten ist, zu einem SO₂-Absorber (21) und dem Aerosolfilter (25);
(e) Leiten einer wässrigen Lösung, welche in der Mischeinrichtung (13) erzeugt wurde, zu dem SO₂-Absorber (21);
(f) Leiten von Gas aus dem Absorber (21) zu dem Aerosolfilter (25), und
(g) Zugeben einer Restmenge an Wasser zu dem Aerosolfilter (25), die notwendig ist, um ungefähr 40-65 Gew.% (NH₄)₂S₂O₃ in der wässrigen Lösung aus (NH₄)₂S₂O₃ zu erhalten, welche aus dem Reaktor (9) entnommen wird.

2. Verfahren nach Anspruch 1, wobei ein Anteil des zweiten EinspeisungsgassVomes (20) zu dem Absorber (21) geleitet wird und mit dem abfließenden Gas aus dem Absorber (21) stromabwärts des Aerosolfilters (25) vermischt wird, wobei der Anteil 0,7-1,3 mol SO₂ je mol NH₃, welches in dem Abgas aus dem SO₂-Absorber (21) enthalten ist, enthält.

3. Verfahren nach Anspruch 1, wobei der SO₂-Absorber (21) eine gepackte Säule ist.

4. Verfahren nach Anspruch 1, wobei der SO₂-Absorber (21) ein Blasentankreaktor mit oder ohne äußerer Flüssigkeitsaufbereitung ist.

5. Verfahren nach Anspruch 1, wobei ein Anteil (28) der Lösung (10), umfassend NH₄HSO₃ und (NH₄)₂S₂O₃, die in dem SO₂-Absorber (21) hergestellt wird, zu der Mischeinrichtung (13) geleitet wird, wobei der Anteil der Lösung einen Fluss an Sulfit (NH₄HSO₃ und (NH₄)₂S₂O₃) umfasst, welcher sich zusammen mit dem Sulfit in dem Abstrom aus dem Aerosolfilter (25) zu dem Fluss an Sulfid (H₂S + NH₃HS) in dem Strom aus dem Kondensator (4) in einer Beziehung mit einem Molarverhältnis von 2:1 oder mehr befindet.

6. Verfahren nach Anspruch 1, wobei der zweite Einspeisungsgasstrom ein abfließender Gasstrom aus einer Clausanlage ist, welche gezündet wird und deren H₂O-Gehalt auf 3-10 Vol.-% H₂O, vorzugsweise 6 Vol.-% H₂O durch Abkühlen und teilweise Kondensation des Gehalts an H₂O stromaufwärts des vorliegenden Verfahrens reduziert wird.

7. Verfahren nach Anspruch 1, wobei der erste Einspeisungsstrom (1) ein Sour-Water-Stripper-Gas ist, welches geteilt und eingestellt wurde, um H₂S und NH₃ in einem Molarverhältnis von H₂S:NH₃ von <0,35 zu enthalten.

8. Verfahren nach Anspruch 1, wobei der pH-Wert der wässrigen Lösung, umfassend NH₄HSO₃ und (NH₄)₂S₂O₃, die zur Absorption von SO₂ in dem Absorber (21) verwendet wurde, auf zwischen ungefähr 5 und ungefähr 7,5 eingestellt wird.

9. Verfahren nach Anspruch 1, wobei die Zufuhrrate von H₂S in dem dritten Einspeisungsstrom (7) so eingestellt ist, dass ein Überschuss des abfließenden H₂S-Stroms aus dem Reaktor (9) 0-10 % der äquivalenten Menge von H₂S zu der Herstellung von (NH₄)₂S₂O₃ erhält und ein Anteil (10) und (35), der in dem SO₂₋Absorber (21) erzeugten Lösung, zu der aus dem Reaktor (9) abgeführten (NH₄)₂S₂O₃-Lösung (12) geführt wird.

## Revendications

1. Procédé pour la production continue de thiosulfate d'ammonium, (NH₄)₂S₂O₃ (ATS), à partir de NH₃, H₂S et SO₂, comprenant les étapes consistant :
(a) à condenser partiellement dans un condenseur partiel (4) un premier courant d'alimentation gazeux ou liquide partiel comprenant H₂O, H₂S et NH₃ avec un rapport molaire H₂S:NH₃ < 0,35, ou à diviser ledit premier courant d'alimentation en un sous-courant (6) et un autre sous-courant (5) ;
(b) à faire passer un condensat aqueux comprenant NH₄HS et NH₃ à partir du condenseur partiel (4) à un réacteur (9) dans lequel ledit condensat est mis en contact avec un troisième courant d'alimentation en gaz (7) comprenant H₂S et avec une solution aqueuse (10) comprenant NH₄HSO₃ et (NH₄)₂SO₃ avec formation d'une solution aqueuse de (NH₄)2S₂O₃, ou à faire passer le sous-courant (5) dudit premier courant d'alimentation au réacteur (9) dans lequel ledit sous-courant est mis en contact avec un troisième courant d'alimentation en gaz (7) comprenant H₂S et avec une solution aqueuse (10) comprenant NH₄HSO₃ et (NH₄)₂SO₃ avec formation d'une solution aqueuse de (NH₄)₂S₂O₃ ;
(c) à faire passer un courant de gaz comprenant NH₃ et H₂S à partir du condenseur partiel (4) à un dispositif de mélange (13) dans lequel ledit courant de gaz est complètement dissous dans l'eau qui s'égoutte d'un filtre aérosol (25), ou à faire passer le sous-courant (6) dudit premier courant d'alimentation au dispositif de mélange (13) dans lequel ledit sous-courant est complètement dissous dans l'eau qui s'égoutte du filtre aérosol (25) ;
(d) à faire passer un deuxième courant d'alimentation en gaz 20 comprenant approximativement 2/3 mole de SO₂ par mole de NH₃ contenu dans le premier courant d'alimentation à un absorbeur de SO₂ (21) et au filtre aérosol (25) ;
(e) à faire passer une solution aqueuse produite dans le dispositif de mélange (13) à l'absorbeur de SO₂ (21) ;
(f) à faire passer le gaz dégagé par l'absorbeur (21) au filtre aérosol (25), et
(g) à ajouter au filtre aérosol (25) une quantité restante d'eau requise pour obtenir approximativement 40 à 65 % en poids de (NH₄)₂S₂O₃ dans la solution aqueuse de (NH₄)₂S₂O₃ qui est soutirée du réacteur (9).

2. Procédé selon la revendication 1, dans lequel une fraction du deuxième courant d'alimentation en gaz (20) contourne l'absorbeur (21) et est mélangée avec l'effluent gazeux de l'absorbeur (21) en amont du filtre aérosol (25), ladite fraction contenant 0,7 à 1,3 mole de SO₂ par mole de NH₃ contenu dans le gaz dégagé par l'absorbeur de SO₂ (21).

3. Procédé selon la revendication 1, dans lequel l'absorbeur de SO₂ (21) est une colonne garnie.

4. Procédé selon la revendication 1, dans lequel l'absorbeur de SO₂ (21) est un réacteur à réservoir sous barbotage avec ou sans recyclage externe du liquide.

5. Procédé selon la revendication 1, dans lequel une fraction (28) de la solution (10) comprenant NH₄HSO₃ et (NH₄)₂SO₃ formée dans l'absorbeur de SO₂ (21) est véhiculée au dispositif de mélange (13), ladite fraction de la solution comprenant un flux de sulfite (NH₄HSO₃ et (NH₄)₂SO₃) qui, avec le sulfite dans le courant dégagé par le filtre aérosol (25), a une relation avec le flux de sulfure (H₂S + NH₃HS) dans le courant du condenseur (4) d'un rapport molaire de 2:1 ou plus.

6. Procédé selon la revendication 1, dans lequel le deuxième courant d'alimentation en gaz est un courant d'effluent gazeux d'une installation de Claus qui est incinéré et sa teneur en H₂O réduite à 3 - 10 % en volume de H₂O, de préférence 6 % en volume de H₂O, par refroidissement et condensation partielle de sa teneur en H₂O en amont du présent procédé.

7. Procédé selon la revendication 1, dans lequel le premier courant d'alimentation (1) est un gaz de colonne de désulfuration à la vapeur qui a été fractionné et ajusté pour contenir H₂S et NH₃ à un rapport molaire de H₂S:NH₃ < 0,35.

8. Procédé selon la revendication 1, dans lequel la valeur de pH de la solution aqueuse comprenant NH₄HSO₃ et (NH₄)₂SO₃ utilisée pour absorber SO₂ dans l'absorbeur (21) est ajustée entre approximativement 5 et approximativement 7,5.

9. Procédé selon la revendication 1, dans lequel la vitesse d'alimentation de H₂S dans le troisième courant d'alimentation (7) est ajustée pour donner un excès de courant d'effluent de H₂S du réacteur (9) de 0 à 10 % de la quantité équivalente de H₂S pour la production de (NH₄)₂S₂O₃, et une fraction (10) et (35) de la solution formée dans l'absorbeur de SO₂ (21) est déviée à la solution de (NH₄)₂S₂O₃ (12) soutirée du réacteur (9).
